**Europäisches Patentamt**

(19) **European Patent Office**

**Office européen des brevets**

(11) Publication number : **0 431 283 B1**

(12) **EUROPEAN PATENT SPECIFICATION**

(45) Date of publication of patent specification :
21.12.94 Bulletin 94/51

(51) Int. Cl.⁵ : **G05B 13/02**

(21) Application number : **90119646.9**

(22) Date of filing : **13.10.90**

(54) **Manufacturing process optimization.**

(30) Priority : **21.11.89 US 440057**

(43) Date of publication of application :
**12.06.91 Bulletin 91/24**

(45) Publication of the grant of the patent :
**21.12.94 Bulletin 94/51**

(84) Designated Contracting States :
**DE FR GB**

(56) References cited :
**US-A- 4 616 308**
**BIOMETRICS, March 1954, pages 16 - 60 ;**
**G.E.P.BOX: 'the exploraton and exploitation of response surfaces'**
**ISA TRANSACTIONS, vol. 22, no. 3, 1983,PITTSBURGH US pages 17 - 25 ; E.H.BRISTOL: 'the design of industrially useful adaptive controllers'**

(73) Proprietor : **International Business Machines Corporation**
**Old Orchard Road**
**Armonk, N.Y. 10504 (US)**

(72) Inventor : **Kurtzberg, Jerome M.**
**2303 Mark Road**
**Yorktown Heights, N.Y. 10598 (US)**
Inventor : **Levanoni, Menachem**
**623 Giordano Drive**
**Yorktown Heights, N.Y. 10598 (US)**

(74) Representative : **Schäfer, Wolfgang, Dipl.-Ing.**
**IBM Deutschland Informationssysteme GmbH**
**Patentwesen und Urheberrecht**
**D-70548 Stuttgart (DE)**

## Description

The present invention concerns a method of selecting manufacturing process variable values for manufacturing process optimization. Specifically, a non-iterative method for selecting process variable values based on a second order response surface mapping representation of the manufacturing process determines the optimal variable values in a single computation for optimizing manufacturing results.

Manufacture of product generally involves a series or sequence of interrelated activities collectively referred to as a manufacturing process. Each activity has one or more process variables which affect the efficiency or yield of the particular activity. In addition, the performance of an activity may, and usually does, affect the performance or requirements of another activity in the overall manufacturing process required to manufacture a product. It will therefore be evident that adjustment of the value or set point of any of the variables in any one activity can have a major impact on the manufacture of the final product. Therefore, it is necessary to calculate by computer and adjust all of the process variable values in order to optimize the manufacturing process.

In the prior art (e.g. US-A-4 616 308), models of a manufacturing process have been developed in which the process variable values are adjusted iteratively by sequential perturbation of process parameters and observation of the effect of the adjustment upon the manufacturing process. In other prior methods, particularly methods associated with two controllers, the independent process variable values are simply adjusted to a predetermined reference value.

In manufacturing processes there are dependent variables or parameters which are the result of performing the process. Each process is associated with a design target value for each dependent variable. In addition, there are independent variables in a manufacturing process which are adjustable. The manufacturing process efficiency performs according to the adjusted values of the independent variables. In the present invention, a method is disclosed for determining the values for the independent variables which are required to optimize overall manufacturing system process performance.

The present invention employs a response surface mapping technique to represent the manufacturing process and to determine the optimal variable values in a single computation for achieving a specified product level target, such as yield.

Additionally, in the design and manufacture of a product theoretical values for each of the dependent variables are calculated in order to optimize the manufacturing process. In calculating the values of the independent variables, the present invention seeks a solution most nearly approximating the theoretical values of the dependent variables, i.e., design parameters.

A principle object of the present invention is, therefore, the provision of a method for selecting manufacturing process variable values which achieve a specified process response.

Another object of the invention is the provision of a method for selecting manufacturing process variable values which yield a specified process response and also approximate design parameters.

A further object of the invention is the provision of a method for selecting manufacturing process variable values based on a second order response surface mapping used to represent the manufacturing process.

A still further object of the invention is the provision of a non-iterative method for selecting process variable values in a single computation based on a second order response surface mapping of the manufacturing process.

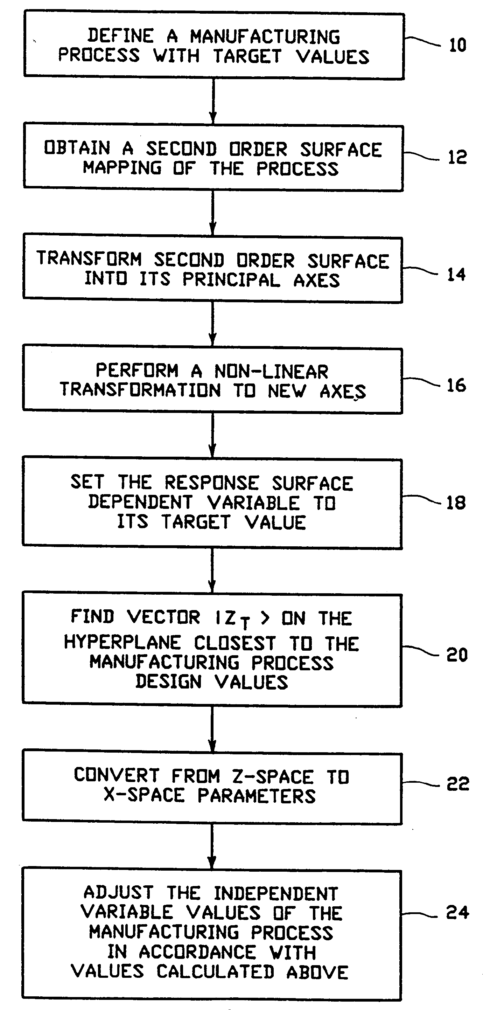

Further and still other objects of the present invention will become more apparent when the following specification is read in conjunction with the accompanying drawing.

The sole figure is a flow diagram of a preferred embodiment for practicing the present invention.

Typically, before a product is to be manufactured, product development and manufacturing engineering organizations design and test both a manufacturing process and a product manufactured according to the process. The manufacturing variable values determined, for instance, in a preproduction product development project are referred to as design parameters. In theory, when all the independent variables, e.g., temperature, energy level, time, etc., are set to achieve the design parameter values, the developed manufacturing process should be optimized for the product being manufactured. However, in practice, the designed manufacturing process variables require fine adjustment in order to optimize the manufacturing process itself. The present invention provides a method of adjusting the independent variable values of a manufacturing process while seeking a solution such that the adjusted value of the dependent variable approximates the design value.

The concept of the invention will best be understood by considering a manufacturing process comprising K independent, controllable variables, i.e., input variables, denoted by vector $|x>$ of length K. The response variable, i.e., output variable, is denoted as dependent variable y having a specified target value of $Y_T$. The problem to be solved by use of a computer is the identification of a vector $|X_T>$ which achieves a predetermined manufacturing process output target, i.e., set points vector. If it is not possible to achieve the desired target values, the values will be selected so that the closest values of y to the desired target values $Y_T$ result. If multiple solutions to the problem exists, the solution closest to the design parameters $|x_S>$, is the selected solution. In order to demonstrate the present invention, an illustrative example will be described hereinafter. The invention is not limited to the following example which is provided for illustrative purposes only.

A simple planar CMOS capacitor manufacturing process comprises thermal oxidation of doped silicon wafer, followed by an implant step and a drive-in (anneal) step and final metallization. The process variables in the example are to be selected so that a predetermined capacitor threshold voltage is achieved.

The problem to be solved is the determination of various times, temperatures, energy levels, dosages and the like (i.e., values for all the independent variables) which will result in the achievement of the predetermined threshold voltage (or closest to the threshold voltage) while at the same time, the dependent variable values approximate the design parameters of the manufacturing process. Referring now to the figure, a manufacturing process with design or target values is defined in Step 10.

In Step 12, the manufacturing process is expressed as a second order response surface mapping of the process. The mapping is achieved in a known manner by a Design-of-Experiments technique or by simply fitting a second order multi-variant polynomial to manufacturing data obtained from the process.

The surface response is expressed as $y = b_0 + <b|x> + <x|B|x>$ where $|b>$ is a vector of linear coefficients and B is a symmetric matrix of quadratic coefficient of the second order surface.

In Step 14, the second order response surface obtained in Step 12 is transformed into its principle axes. The canonical transformation is accomplished by a translation followed by a rotation. The transformation is given by $|x> = |x_0> + M|w>$ where $|X_0> = -.5B^{-1}|b>$ and M is an orthogonal matrix whose columns are the (normalized) eigenvectors of matrix B. The term $|w>$ is the new (transformed) coordinate axes, and the term $|W_S> = M'|X_S-X_0>$ represents design specifications in w-space. The response surface has become $y = Y_0 + <\lambda|W^2$ where $|\lambda>$ is a vector of the eigenvalues of matrix B, and $Y_0$ is a process response at $|X_0>$.

In Step 16, a nonlinear transformation to new axes via $|W^2> |z>$ is performed. The second order surface in w-space becomes a first order surface (hyperplane) of dimension k in z-space. The process design specifications are given by $|z_s> = |W_s^2>$. Τηε ρε−σπονσε συρφαχε ισ νοω $\psi = \Psi_0 + <\lambda|z>$.

In Step 18, the response surface dependent variable y is set to its target value $Y_T$. The response surface becomes a hyperplane in K-1 dimensions where every point on the hyperplane satisfies the target value requirement. Only positive solutions correspond to the "real world" solutions.

Next, it is necessary in Step 20 to find the vector $|Z_T>$ on the hyperplane (in the positive z-space) closest to the process specifications. The result is a desired process values vector in z-space. The vector is $|Z_T> = |Z_S> + ((C-<\lambda/Z_S)/<\lambda/\lambda>)|\lambda>$. If $|Z_T>$ contains negative components, the negative components must be set to zero and removed. The formula is recalculated with the corresponding components of $|Z_S>$ and $|\lambda>$ removed.

The z-space coordinates are converted back into the original x-space parameters in Step 22. The converted x-space parameters are the desired result.

The vector, $|X_T> = |X_0> + M|\sqrt{Z_T}>$, represents process variable values which achieve the target value of the dependent variable or approximates the value of the target value while concurrently being closest to the process design value specifications. The signs of the square root terms are chosen to match the signs belonging to the vector $|W_S>$.

In Step 24, the results of Step 22 are used to adjust the independent process variable values x in the manufacturing process.

The above-described process was tested on a simulation fabrication of a planar CMOS capacitor. The manufacturing (fabrication) process comprised an oxidation step (having the two variables of time and temperature), of an n doped silicon wafer (having a doping concentration variable), followed by an implant step (having dosage and energy variables) followed by an anneal step (having two additional variables of time and temperature) and a metallization step. The response parameter was threshold voltage of the capacitor. Implementation of the above process resulted in the correct determination of all seven listed process variable values in every test case, representing all possible outcomes.

## Claims

1. A method of adjusting independent process variable values for optimizing a manufacturing process having adjustable independent process variables and design target values of dependent variables, the method being performed with the help of a computer comprising the steps of:
   defining (10) the manufacturing process with design target values for the dependent variables;
   obtaining (12) a second order surface mapping of said defined manufacturing process;
   transforming (14) said second order surface mapping into its principle axes by canonical transformation;
   performing (16) a non-linear transformation of said transformed second order surface mapping into new axes thereby transforming said second order surface into a first order surface;

setting (18) dependent variables of the process to the target values on said first order surface;

determining (20) the independent variable values on said first order surface which result in dependent variable values which are or approximate said target values;

converting (22) said independent variable values on said first order surface to original coordinate parameters, and

adjusting (24) said independent variable values in said manufacturing process according to the converted independent variable values in order to optimize the manufacturing process.

2. The method for adjusting independent process variable values for optimizing a manufacturing process as set forth in claim 1 wherein said obtaining a second order surface mapping comprises a design-of-experiment technique.

3. The method for adjusting independent process variable values for optimizing a manufacturing process as set forth in claim 1 or 2 further comprising obtaining manufacturing data corresponding to said manufacturing process and fitting a second order multi-variant polynomial to said obtained manufacturing data.

4. The method for adjusting independent process variable values for optimizing a manufacturing process as set forth in one or more of the preceding claims 1 to 3 wherein said transforming said second order mapping comprises translation followed by a rotation.

**Patentansprüche**

1. Verfahren zur Einstellung von unabhängigen, variablen Prozeßwerten zur Optimierung eines Herstellungsverfahrens mit einstellbaren, unäbhangigen Prozeßvariablen und projektierten Zielwerten von abhängigen Variablen, wobei das Verfahren mit Hilfe eines Computers ausgeführt wird, umfassend die folgenden Schritte:

Definieren (10) des Herstellungsverfahrens mit projektierten Zielwerten für die abhängigen Variablen;

Gewinnen (12) einer Oberflächenprojektion 2. Ordnung des definierten Herstellungsverfahrens;

Transformieren (14) der Oberflächenprojektion 2. Ordnung in ihre Hauptachsen mittels kanonischer Transformation;

Ausführen (16) einer nichtlinearen Transformation der transformierten Oberflächenprojektion 2. Ordnung in neue Achsen, wobei die sekundare Fläche in eine primäre Fläche transformiert wird;

Einstellen (18) von abhängigen Prozeßvariablen auf die Zielwerte auf der primaren Fläche;

Festlegen (20) der Werte der unabhängigen Variablen auf der primären Fläche, die abhängige Variable ergeben, die die Zielwerte sind oder sich diesen nähern;

Umrechnen (22) der Werte der unabhängigen Variablen auf der primären Fläche in ursprüngliche Koordinaten-parameter, und

Einstellen (24) der unabhängigen Variablen in dem Herstellungsverfahren gemäß den Werten der umgerechneten Variablen, um das Herstellungsverfahren zu optimieren.

2. Verfahren zur Einstellung von unabhängigen, variablen Prozeßwerten zur Optimierung eines Herstellungsverfahrens nach Anspruch 1, umfassend ein Versuchsplanungsverfahren zur Gewinnung einer Oberflächenprojektion 2. Ordnung.

3. Verfahren zur Einstellung von unabhängigen, variablen Prozeßwerten zur Optimierung eines Herstellungsverfahrens nach Anspruch 1 oder 2, weiter umfassend die Gewinnung von Herstellungsdaten, die dem Herstellungsverfahren entsprechen, und wobei ein sekundäres Mehrvarianten-Polynom an die gewonnenen Herstellungsdaten angepaßt wird.

4. Verfahren zur Einstellung von unabhängigen, variablen Prozeßwerten zur Optimierung eines Herstellungsverfahrens nach einem oder mehreren der vorhergehenden Ansprüche, bei dem die Transformation der Oberflächenprojektion 2. Ordnung eine Translation umfaßt, nach der eine Rotation erfolgt.

**Revendications**

1. Méthode d'ajustement de valeurs de variables indépendantes d'un procédé pour optimiser un procédé de fabrication ayant des variables indépendantes ajustables et des valeurs de conception cibles des variables dépendantes, la méthode étant mise en oeuvre avec l'aide d'un ordinateur, comprenant les étapes consistant à :

définir (10) le procédé de fabrication avec des valeurs de conception cibles pour les variables dépendantes ;

obtenir (12) une cartographie de surface de deuxième ordre dudit procédé de fabrication défini ;

transformer (14) ladite cartographie de surface de deuxième ordre en ses axes principaux par transformation canonique ;

effectuer (16) une transformation non linéaire de ladite cartographie de surface transformée de deuxième ordre en des axes nouveaux, transformant de ce fait ladite surface de deuxième ordre en une surface de premier ordre ;

fixer (18) des variables dépendantes du procédé à des valeurs cibles sur ladite surface de premier ordre ;

déterminer (20) les valeurs des variables indépendantes sur ladite surface de premier ordre qui donnent des valeurs de variables dépendantes qui sont égales ou environ égales auxdites valeurs cibles ;

convertir (22) les valeurs desdites variables indépendantes sur ladite surface de premier ordre en paramètres de coordonnées d'origine, et

ajuster (24) lesdites valeurs de variables indépendantes dudit procédé de fabrication en fonction des valeurs de variables indépendantes converties afin d'optimiser le procédé de fabrication.

2. Méthode d'ajustement de valeurs de variables indépendantes de procédé pour optimiser un procédé de fabrication selon la revendication 1, dans lequel l'obtention d'une cartographie de surface de deuxième ordre comprend une technique de conception à base empirique.

3. Méthode d'ajustement de valeurs de variables indépendantes de procédé pour optimiser un procédé de fabrication selon la revendication 1 ou 2, comprenant en outre l'obtention de données de fabrication correspondant audit procédé de fabrication et une régression polynomiale multi-variante du deuxième ordre appliquée auxdites données de fabrication obtenues.

4. Méthode d'ajustement de valeurs de variables indépendantes de procédé pour optimiser un procédé de fabrication selon une ou plusieurs des revendications précédentes 1 à 3, dans lequel ladite transformation de second ordre de cartographie comporte une translation suivie d'une rotation.

```
┌─────────────────────────────┐
│   DEFINE A MANUFACTURING     │────  10
│  PROCESS WITH TARGET VALUES  │
└─────────────────────────────┘
              │
              ▼
┌─────────────────────────────┐
│  OBTAIN A SECOND ORDER SURFACE │──  12
│    MAPPING OF THE PROCESS    │
└─────────────────────────────┘
              │
              ▼
┌─────────────────────────────┐
│ TRANSFORM SECOND ORDER SURFACE │──  14
│    INTO ITS PRINCIPAL AXES   │
└─────────────────────────────┘
              │
              ▼
┌─────────────────────────────┐
│    PERFORM A NON-LINEAR      │──  16
│  TRANSFORMATION TO NEW AXES  │
└─────────────────────────────┘
              │
              ▼
┌─────────────────────────────┐
│    SET THE RESPONSE SURFACE  │──  18
│     DEPENDENT VARIABLE TO    │
│       ITS TARGET VALUE       │
└─────────────────────────────┘
              │
              ▼
┌─────────────────────────────┐
│  FIND VECTOR $|Z_T\rangle$ ON THE │
│  HYPERPLANE CLOSEST TO THE   │──  20
│   MANUFACTURING PROCESS      │
│       DESIGN VALUES          │
└─────────────────────────────┘
              │
              ▼
┌─────────────────────────────┐
│  CONVERT FROM Z-SPACE TO     │──  22
│    X-SPACE PARAMETERS        │
└─────────────────────────────┘
              │
              ▼
┌─────────────────────────────┐
│   ADJUST THE INDEPENDENT     │
│   VARIABLE VALUES OF THE     │──  24
│   MANUFACTURING PROCESS      │
│     IN ACCORDANCE WITH       │
│  VALUES CALCULATED ABOVE     │
└─────────────────────────────┘
```